# EUROPEAN PATENT SPECIFICATION

(11) **EP 0 664 054 B1**
(45) Date of publication and mention of the grant of the patent: **30.12.1998**
(21) Application number: 92920185.3
(22) Date of filing: 09.09.1992
(51) Int. Cl.: H01M 2/26, H01M 2/28, H01M 10/12

(54) **Method of fabricating a battery**
Herstellungsmethode einer Batterie
Méthode de fabrication d'un accumulateur

(30) Priority: 10.09.1991 US 757447
(43) Date of publication of application: 26.07.1995
(60) Divisional application: 98201996.0
(73) Proprietor: BOLDER TECHNOLOGIES CORPORATION, Wheatridge, Colorado 80033 (US)
(72) Inventor: JUERGENS, Tristan E., Black Hawk, CO 80403 (US)
(74) Representative: Lucas, Brian Ronald
(86) International application number: PCT/US92/07653
(87) International publication number: WO 93/05540

(56) References cited:
- EP-A- 0 051 349
- EP-A- 0 251 683
- EP-A- 0 314 318
- WO-A-91/08596
- DE-A- 2 024 172
- GB-A- 582 654
- GB-A- 1 136 009
- US-A- 3 764 386
- US-A- 3 915 218
- US-A- 4 399 607
- US-A- 4 495 259
- US-A- 4 683 180
- PATENT ABSTRACTS OF JAPAN vol. 012 no. 115 (E-599) ,12 April 1988 & JP-A-62 243246 (SHIN KOBE ELECTRIC MACH CO LTD) 23 October 1987,
- PATENT ABSTRACTS OF JAPAN vol. 005 no. 044 (E-050) ,24 March 1981 & JP-A-56 001463 (MATSUSHITA ELECTRIC IND CO LTD) 9 January 1981,

## Description

This invention relates to a method of manufacturing a battery and to a battery manufactured by said method.

Batteries are typically constructed with a set of anode plates and a set of interleaving cathode plates, which are spaced apart by separators infused with an electrolyte. The anode plates must be electrically connected to the battery anode terminal, and the cathode plates must be electrically connected to the battery cathode terminal. For the sake of rigidity the connection between the plates and the terminals is typically mechanical as well as electrical, and is accomplished via an end connector.

The attachment of the anode and cathode plates to their respective end connectors is one of the more labour intensive and fault intensive aspects of battery construction. Ideally, the end connector should rigidly support the plates to help prevent their deformation within the battery case and to resist vibrational damage to the plates and separators. Further, the end connectors should be formed of a material that is readily connectable to both the battery terminal and to the plates in a manner that assures an easy and dependable electrical and mechanical connection. It is particularly important that the electrical connection to both the plates and the battery terminals be of the lowest possible resistance, or at least of a resistance no greater than the resistance in the plates and battery terminals themselves, so that the impedance of the connection is minimised and the current carrying capacity is maximised.

These goals become especially important in a battery with extremely thin plates. Several prior art documents describe electrically connecting an electrode plate of a battery and an electrode connector establishing electrical communication between the battery plates and the terminals; the connection is established by a melt casting process (W091/08596, US-A-3,764,386, JP-A-62243246, DE-A-2024172, EP-A-051349, EP-A-314318, EP-A-251683, US-A-4,495,250). A laminated foil arrangement of a battery exhibiting outer lead layers of thickness 0.25mm is described in EP-A-051349.

According to one aspect of the present invention there is provided a a battery which comprises a first electrical plate having a first electrical polarity, a first electrical battery terminal, and a first end connector for establishing electrical communication between said first electrical plate and said first electrical battery terminal, said first end connector being connected to said first electrical battery terminal and cast onto said first electrical plate, characterised in that said first electrical plate has a thickness of less than 0.127mm (0.005 inches) and said casting is carried out by immersing an edge of said first electrical plate in a mould containing molten metal which has a heat content substantially such that the addition of heat will result in an increase in temperature of the molten metal whilst the subtraction of heat will result in the formation of a mixture of solid and molten metal, whereby by drawing a graph in which the ordinate represents the temperature of said metal and the absiscae represents heat input so as to define a first portion (A) in which the temperature of the solid metal rises as heat is added to it, followed by a plateau portion (B) where heat is utilised to melt the solid metal without materially increasing the temperature of the solid/liquid mixture, and a third portion (C) having an incline and representing an increase of the temperature of the melt as heat is added to it, the plate is submerged in the molten metal when its heat content is such that it corresponds to a point, which is close to the boundary between the plateau portion (B) and the incline of the third portion (C).

When correctly executed the connection between the first end connector and the first electrical plate has a crystalline structure with substantially no discontinuation. This results in a strong mechanical structure which offers excellent electrical conductivity.

Preferably, said molten metal is contained in an open end connector mould.

Advantageously, said edge of said first electrical plate is immersed in said molten metal when part has solidified.

In one embodiment said edge of said first electrical plate is wavy and has protruding edge portions and recessed edge portions and said method includes the step of casting said first electrical plate to said first end connector so that said protruding edge portions are attached to said first end connector but said recessed edge portions are not.

Preferably, said battery includes a second electrical plate and separators, and said method includes the step of winding said first electrical plate, said second electrical plate and separators to form a spirally wound plate and separator assembly.

Advantageously, said method includes the step of performing said winding so that said first electrical plate projects outwardly from one of said spirally wound plate and separator assembly and said second electrical plate projects outwardly from the other end.

Preferably, said battery includes a plurality of first electrical plates, a plurality of second electrical plates, and a plurality of separators and said method comprises the step of arranging said first electrical plates, said second electrical plates and said separators in a stack.

Advantageously, said electrical plates each have a thickness of less than 0.127 mm (0.005 inches).

For a better understanding of the invention reference will now be made, by way of example, to the accompanying drawings, in which:-
Fig. 1 in a perspective view, partial in cross-section, of one embodiment of a battery in accordance with the present invention;
Fig. 2 is a cross-section of the upper portion of the battery shown in Fig 1;
Fig. 3 is a cross-section of the lower portion of the battery shown in Fig. 1;
Fig 4 shows a graph of temperature versus heat content for lead;
Fig. 5 shows a plan view of a plate used with a second embodiment of a battery in accordance with the present invention; and
Fig. 6 is a cross-section of a third embodiment of a battery in accordance with the present invention.

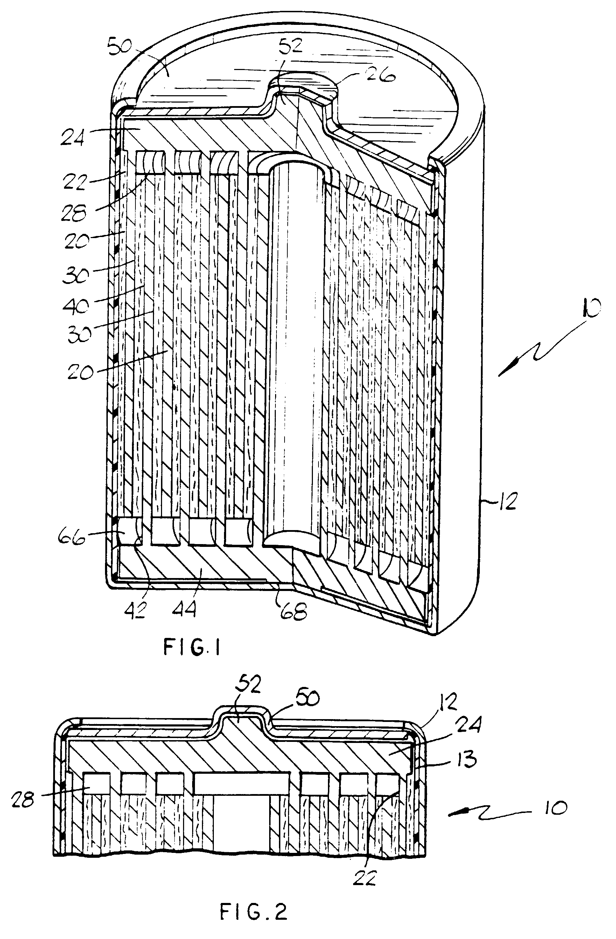

Referring to Figure 1 of the drawings this is shown a battery which is generally identified by the reference numeral 10.

The battery 10 includes a battery case 12 which encloses a spirally wound plate and separator assembly 14 which comprises an anode plate 20, a cathode plate 40, and a separator 30 therebetween. The total number of turns will depend on the thickness of the plates 20, 40 separator 30 and the diameter of the outer case 12. The number of turns shown in the drawings is only for illustrational purposes and is not intended to depict the actual number.

The spirally wound plate and separate assembly 14 is wound from a single ribbon of anode plate and a single ribbon of cathode plate separated by ribbons of separator plate 30. The anode plate 20 and cathode plate 40 are wound axially offset from one another so that an edge 22 of the anode plate 20 projects axially from one end of the spirally wound plate and separator assembly 14 and the edge 42 of the cathode plate 40 projects axially from the other end of the spirally wound plate and separator assembly 14.

The edge 22 of the anode plate 20 is attached to a disk-shaped anode end connector 24 which is in turn attached to an anode terminal 26.

The edge 42 of the cathode plate 40 is attached to a similar disk-shaped cathode end connector 44 which is in turn attached to the cathode terminal formed by the battery case 12.

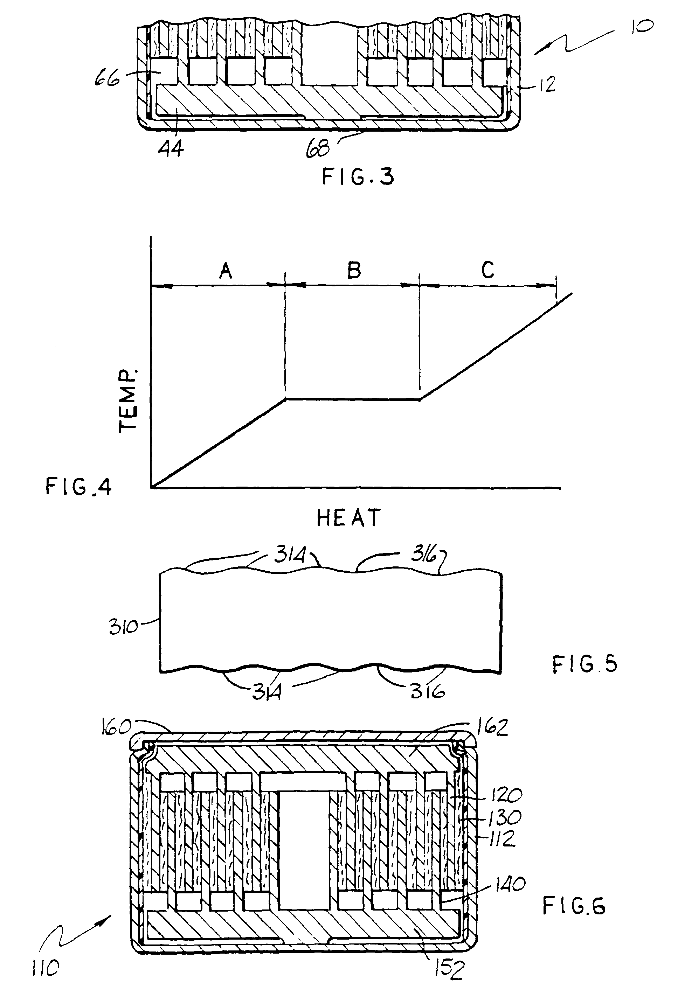

The arrangement of the end connectors 24 and 44 in relation to the battery 10 is shown in greater detail in Figs. 2 and 3 respectively.

As shown in Fig. 2 the edge 22 of the anode plate 20 is connected to the bottom of the end connection 24. The anode plate 20 projects axially from the spirally wound plate and separator assembly 14 such that there is an insulating plate 28 between the upper end of the cathode plate 40 and the anode end connector 24.

The battery case 12 encloses the cylindrical spiral winding and is separated therefrom by a case insulator 13.

The top of the anode end connector 24 is covered with an anode terminal plate 50 which is attached thereto at the top of an axially extending anode end connector tab 52. The anode terminal plate 50 is electrically insulated from the battery case 12 by a case insulator 13.

The edge 42 of the cathode plate 40 is connected to the top of the cathode end connector 44. As in the case of the anode plate 20, the edge 42 of the cathode plate 40 axially protrudes sufficiently from the spirally wound plate end separator assembly 14 so that there is an insulating space 66 between the end of the anode plate 20 and the cathode end connector 44. The bottom of the cathode end connector 44 has an axially protruding tab 68 that is attached to the inner surface of the battery case 12 as shown.

The anode plate 20 and cathode plate 40 are connected to the anode end connector 24 and the cathode end connector 44 respectively as follows.

Firstly, the end connectors are cast in an open top connector mould. While the metal is still molten, the spirally wound plate and separator assembly 14 is dipped into the molten metal to a depth sufficient to submerge the axially protruding edge of one plate but not to such a depth that the non-protruding edge of the opposite polarity plate or the separator 30 are submerged. The end connector is then allowed to harden, and the hardened end connector and attached spirally wound plate and separator assembly 14 are then freed from the mould. The same process is used to attach the opposite end connector.

The temperature and heat content of the molten end connector when the plate edge is submerged is important. If the heat content is too high, the molten metal will melt off the submerged plate edge. If the heat content is too low, the molten metal will be unable to heat the plate sufficiently to form a strong electrical and mechanical connection.

Fig. 4 shows a graph of temperature versus heat content at the melting point of lead. As the graph indicates, lead has a typical melting characteristic. The solid lead increases in temperature as heat is added to it, as shown in portion A of the graph. When it reaches the melting point, however, the temperature remains constant. Additional heat is utilised to melt the solid lead without increasing the temperature of the solid/liquid mixture. This plateau of constant temperature is shown as portion B of the graph. When the lead is fully melted, additional heat then begins to increase the temperature again, as shown in portion C of the graph.

The edge of the spirally wound plate and separator assembly 14 should be submerged into the molten lead of the end connector casting when the molten lead is close to the boundary between the plateau of portion B and the incline of portion C of the graph of Fig. 4. It can be appreciated that if the molten lead is substantially to the left of the boundary, then the metal will be only partially melted when the plates are submerged into it. The partially molten metal will form a relatively poor electrical and mechanical connection with the plates. Making matters worse is that the plates themselves will normally be cooler than the molten metal and will thereby draw heat out of the molten metal, thereby further solidifying it and contributing to an even worse electrical and mechanical connection. On the other hand, if the molten material is substantially to the right of the boundary between portion B and portion C of the graph of Fig. 4, then the temperature is above the melting point and the metal is completely molten. If the edge of the plate is submerged in the molten material at this point, the molten material will have sufficient heat to not only raise the temperature of the plate to the melting point to form a good electrical and mechanical connection, it will have sufficient heat to melt off the edge of the plate.

The precise amount of heat desired in the molten lead in order to result in a good electrical and mechanical connection to the plate without melting the plate, will depend on the alloy characteristics of the plate and the end connector, the submersing temperature of the plate, the volume and configuration of both the end connectors and the plate, the thermodynamic characteristics of the mould, and other factors. Once the general principle and objective is known a person skilled in the art will be able to accomplish the process without undue experimentation.

The plates or the end connectors or both may be fabricated from a lead alloy containing roughly 0.5 to 0.6% tin. The use of lead/tin alloys in battery plates is generally known to produce a so-called tin effect whereby surface passivation is reduced so that charge and discharge characteristics are improved. Alternatively, the plates or end connectors or both may be coated with tin in order to reduce passivation without producing grain boundary corrosion sites in the conductor. Such coating is preferably very thing - of the order of one micron - and may be applied by sputter coating or other techniques known in the art. Finally, the end connectors may be fabricated from a 60/40 alloy of lead/tin while the plates are still pure or substantially pure lead. This lowers the melting temperature and increases the process parameters of the end connectors.

Once the end connectors are cast onto the spirally wound plate and separator assembly 14, the entire unit can be placed into the battery case 12 lined with the case insulator 13. The anode terminal plate 50 is placed over the open end to clockwise the case, and the case is crimped around the anode terminal plate 50 or otherwise connected thereto. It is important that the connection between the battery case 12 and the anode terminal plate 50 includes insulation between the two to prevent a short circuit of the battery. In the embodiment shown in Figs. 1-3, the insulation is accomplished by the battery case insulator 13 extending upwardly and slightly over the top edge of the anode end connection 24 between the anode end connector 24 and the crimp on battery case 12.

The anode end connector tab 52 is then attached to the anode terminal plate 50 at the central indentation of the anode terminal plate 50 by applying sufficient heat to the exterior surface of the central indentation to melt the anode end connector tab 52 onto the interior surface of the central indentation. This heat can be applied with a spot welder or by normal heating means such as a soldering iron. The axially protruding tab 68 of the cathode end connector 44 is attached to the interior surface of the battery case 12 in the same manner. Sufficient heat is applied to the center of the battery case 12 over the axially protruding tab 68 to melt the axially protruding tab 68 onto the interior surface of the battery case 12.

A battery constructed in the manner described above provides excellent support for the plates, and has high resistance to vibrational damage. It also has an excellent electrical and mechanical connection from the plates through the end connectors and terminals because of a continuous crystalline structure between the end connectors and the plates and the absence of any impedance-increasing reduction in cross sectional area for the electrical current path. These features are particularly important in a thin plate battery in which the plates are fragile, numerous and closely spaced, and in which relatively high current loads are possible.

The plates used with another embodiment of the invention is shown in Fig. 5. In this embodiment, the plates 310 have an intermittent edge, in the form of a wavy edge that includes protruding portions 314 and recessed portions 316. The wavy edge facilitate the immersion of the wound plate into the molten lead in the end connector mould by breaking the surface tension of the molten lead. The protruding portions 314 are connected to the end connector whilst the recessed portion 316 are not. The resulting spaces allow liquid to flow between the plates, thereby facilitating the injection of acid or water into the battery.

Yet another embodiment of the invention is shown in Fig. 6, in which the plates and separators are stacked rather than being spirally wound. The battery 110 includes a battery case 112, a set of individual anode plates 120, a set of separators 130 and a set of individual cathode plates 140. The anode plates 120 are electrically and mechanically connected to each other and to an anode terminal 160 by an anode end connector 162, and the cathode plates 140 are electrically and mechanically connected to each other and to a cathode end connector 152. As in the earlier-described embodiment, this embodiment includes a battery case insulator to insulate the battery case from the plates 120, 140 and separators 130 and to insulate the battery case 12 (which is common to the cathode terminal) from the anode terminal, the anode plates 120, and an arrangement for closing the case (not shown). The end connectors 152 and 162 are attached to the plates utilising the casting process described above, to achieve a mechanically strong and electrically good connection.

The embodiment shown in Fig. 6 can be made in virtually any configuration, for example, to fit into power tool handle. The various configurations can be obtained either by using plates of abruptly or gradually varying edge profiles stacked together or by using plates of a single edge profile and then cutting the sandwiched layers after they are assembled.

It should be apparent to those skilled in the art that still other plate configurations are possible. Further, while the reference herein is to "plates", the plates need not be flat and need not be permeable. The plates can be curved or of varying thickness and may also be porous or semi porous.

## Claims

1. A method of manufacturing a battery which comprises a first electrical plate (20; 120; 310) having a first electrical polarity, a first electrical battery terminal (26;160), and a first end connector (24; 162) for establishing electrical communication between said first electrical plate (20; 120; 310) and said first electrical battery terminal (26; 160), said first end connector (24; 162) being connected to said first electrical battery terminal (26; 160) and cast onto said first electrical plate (20; 120), characterised in that said first electrical plate (20, 120, 310) has a thickness of less than 0.127mm (0.005 inches) and said casting is carried out by immersing an edge of said first electrical plate in a mould containing molten metal which has a heat content substantially such that the addition of heat will result in an increase in temperature of the molten metal whilst the subtraction of heat will result in the formation of a mixture of solid and molten metal, whereby by drawing a graph in which the ordinate represents the temperature of said metal and the absiscae represents heat input so as to define a first portion (A) in which the temperature of the solid metal rises as heat is added to it, followed by a plateau portion (B) where heat is utilised to melt the solid metal without materially increasing the temperature of the solid/liquid mixture, and a third portion (C) having an incline and representing an increase of the temperature of the melt as heat is added to it, the plate is submerged in the molten metal when its heat content is such, that it corresponds to a point, which is close to the boundary between the plateau portion (B) and the incline of the third portion (C).

2. A method according to Claim 1, characterised in that said molten metal is contained in an open end connector mould.

3. A method according to Claim 1 or 2, characterised in that said edge (22) of said first electrical plate (20; 120; 310) is immersed in said molten metal when part has solidified.

4. A method according to Claim 1, 2 or 3, characterised in that said edge of said first electrical plate (310) is wavy and has protruding edge portions (314) and recessed edge portions (316) and said method includes the step of casting said first electrical plate (310) to said first end connector so that said protruding edge portions (314) are attached to said first end connector but said recessed edge portions (316) are not.

5. A method according to Claim 1, 2, 3, or 4, characterised in that said battery includes a second electrical plate (40) and separators (30), and said method includes the step of winding said first electrical plate (20), said second electrical plate (40) and separators (30) to form a spirally wound plate and separator assembly (14).

6. A method according to Claim 5, including the step of performing said winding so that said first electrical plate (20) projects outwardly from one of said spirally wound plate and separator assembly (14) and said second electrical plate (40) projects outwardly from the other end.

7. A method according to Claim 1, 2, 3 or 4, characterised in that said battery includes a plurality of first electrical plates (120), a plurality of second electrical plates (140), and a plurality of separators (130), and said method comprises the step of arranging said first electrical plates (120), said second electrical plates (140) and said separators (130) in a stack.

8. A method according to Claim 5, 6 or 7, characterised in that said electrical plates each have a thickness of less than 0.127 mm (0.005 inches).

## Patentansprüche

1. Ein Verfahren zum Herstellen einer Batterie, welche eine erste elektrische Platte (20; 120; 310) mit einer ersten elektrischen Polarität, einen ersten elektrischen Batterieanschluß (26; 160) und einen ersten Endverbinder (24; 162) zum Bilden einer elektrischen Verbindung zwischen der genannten ersten elektrischen Platte (20; 120; 310) und dem genannten ersten elektrischen Batterieanschluß (26; 160) aufweist, wobei der genannte erste Endverbinder (24; 162) mit dem genannten ersten elektrischen Batterieanschluß (26; 160) verbunden und an die genannte erste elektrische Platte (20; 120) angeformt ist, **dadurch gekennzeichnet**, daß die genannte erste elektrische Platte (20; 120; 310) eine Dicke von weniger als 0,127 mm (0,005 Inch) aufweist und daß das genannte Formen durch Eintauchen eines Randes der genannten ersten elektrischen Platte in eine Form ausgeführt wird, welche geschmolzenes Metall enthält, das einen Wärmeinhalt aufweist, der im wesentlichen derart ist, daß die Addition von Wärme zu einer Zunahme in der Temperatur des geschmolzenen Metalls führen wird, während die Subtraktion von Wärme zu der Bildung einer Mischung aus festem und geschmolzenem Metall führen wird, so daß durch Zeichnen einer graphischen Darstellung, in welcher die Ordinate die Temperatur des genannten Metalls darstellt und die Abszisse den Wärmeeingang darstellt, so daß ein erster Bereich (A), in welchem die Temperatur des festen Metalls ansteigt, wenn zu diesem Wärme hinzugefügt wird, gefolgt von einem ebenen Bereich (B), wo die Wärme dazu verwendet wird, um das feste Metall zu schmelzen, ohne die Temperatur der Fest/Flüssig-Mischung materiell zu erhöhen, und ein dritter Bereich (C) definiert werden, der eine Neigung aufweist und eine Zunahme der Temperatur der Schmelze darstellt, wenn zu dieser Wärme hinzugefügt wird, die Platte in das geschmolzene Metall eingetaucht wird, wenn dessen Wärmeinhalt derart ist, daß er einem Punkt entspricht, welcher nahe bei der Grenze zwischen dem ebenen Bereich (B) und der Neigung des dritten Bereichs (C) ist.

2. Ein Verfahren nach Anspruch 1, **dadurch gekennzeichnet,** daß das genannte geschmolzene Metall in einer offenen Endverbinder-Form enthalten ist.

3. Ein Verfahren nach Anspruch 1 oder 2, **dadurch gekennzeichnet,** daß der genannte Rand (22) der genannten ersten elektrischen Platte (20; 120; 310) in das genannte geschmolzene Metall eingetaucht wird, wenn es sich teilweise verfestigt hat.

4. Ein Verfahren nach Anspruch 1, 2 oder 3, **dadurch gekennzeichnet,** daß der genannte Rand der genannten ersten elektrischen Platte (310) gewellt ist und vorstehende Randbereiche (314) und vertiefte Randbereiche (316) aufweist und daß das genannte Verfahren den Schritt des Formens der genannten ersten elektrischen Platte (310) an den genannten ersten Endverbinder aufweist, so daß die genannten vorstehenden Randbereiche (314) an dem genannten ersten Endverbinder angebracht werden, jedoch die genannten vertieften Randbereiche (316) nicht angebracht werden.

5. Ein Verfahren nach Anspruch 1, 2, 3 oder 4, **dadurch gekennzeichnet**, daß die genannte Batterie eine zweite elektrische Platte (40) und Separatoren (30) aufweist und daß das genannte Verfahren den Schritt eines Windens der genannten ersten elektrischen Platte (20), der genannten zweiten elektrischen Platte (40) und der Separatoren (30) aufweist, um eine spiralig gewundene Platten- und Separatoren-Anordnung (14) zu bilden.

6. Ein Verfahren nach Anspruch 5, welches den Schritt des Ausführens des genannten Windens in der Weise aufweist, daß die genannte erste elektrische Platte (20) von einem Ende der genannten spiralig gewundenen Platten- und Separatoren-Anordnung (14) nach auswärts vorsteht und die genannte zweite elektrische Platte (40) von dem anderen Ende nach auswärts vorsteht.

7. Ein Verfahren nach Anspruch 1, 2, 3 oder 4, **dadurch gekennzeichnet**, daß die genannte Batterie eine Mehrzahl von ersten elektrischen Platten (120), eine Mehrzahl von zweiten elektrischen Platten (140) und eine Mehrzahl von Separatoren (130) aufweist und daß das genannte Verfahren den Schritt des Anordnens der genannten ersten elektrischen Platten (120), der genannten zweiten elektrischen Platten (140) und der genannten Separatoren (130) in einem Stapel aufweist.

8. Ein Verfahren nach Anspruch 5, 6 oder 7, **dadurch gekennzeichnet**, daß die genannten elektrischen Platten jeweils eine Dicke von weniger als 0,127 mm (0,005 Inch) aufweisen.

## Revendications

1. Procédé de fabrication d'une batterie qui comprend une première plaque électrique (20; 120; 310) présentant une première polarité, une première borne électrique de batterie (26; 160), et un premier connecteur d'extrémité (24; 162) pour établir une liaison électrique entre ladite première plaque électrique (20; 120; 310) et ladite première borne électrique de batterie (26 ; 160), ledit premier connecteur d'extrémité (24; 162) étant connecté à ladite première borne électrique de batterie (26; 160) et moulé sur ladite première plaque électrique (20; 120), caractérisé en ce que ladite première plaque électrique (20, 120, 310) présente une épaisseur inférieure à 0,127 mm (0,005 pouce) et en ce que ledit moulage est réalisé en immergeant un bord de ladite première plaque électrique dans un moule contenant du métal fondu qui possède un apport de chaleur essentiellement tel que l'addition de chaleur aboutira à une augmentation de la température du métal fondu alors que la soustraction de chaleur entraînera la formation d'un mélange de métal solide et de métal fondu, de sorte qu'en traçant un graphe dans lequel l'ordonnée représente la température dudit métal et dans lequel l'abscisse représente l'apport de chaleur de façon à définir une première portion (A) dans laquelle la température du métal solide augmente lorsqu'on lui ajoute de la chaleur, suivi d'une portion en plateau (B) où la chaleur est utilisée à la fusion du métal solide sans augmenter sensiblement la température du mélange de liquide et de solide, et une troisième portion (C) présentant une pente et représentant une augmentation de la température du produit fondu lorsqu'on lui ajoute de la chaleur, la plaque est immergée dans le métal fondu lorsque son apport de chaleur est tel qu'il correspond à un point qui est voisin de la frontière entre la portion en plateau (B) et la pente de la troisième portion (C).

2. Procédé selon la revendication 1, caractérisé en ce que ledit métal fondu est contenu dans un moule de connecteur d' extrémité ouvert.

3. Procédé selon la revendication 1 ou 2, caractérisé en ce que ledit bord (22) de ladite première plaque électrique (20; 120; 310) est immergé dans ledit métal fondu lorsqu'une partie est solidifiée.

4. Procédé selon la revendication 1, 2 ou 3 , caractérisé en ce que ledit bord de ladite première plaque électrique (310) est ondulé et présente des parties de bord en saillie (314) et des parties de bord en creux (316) et en ce que ledit procédé comprend l'étape consistant à mouler ladite première plaque électrique (310) avec ledit premier connecteur d'entrée de façon que lesdites portions de bord en saillie (314) soient fixées audit premier connecteur d'entrée mais que lesdites portions de bord en creux (316) ne le soient pas.

5. Procédé selon la revendication 1, 2, 3 ou 4, caractérisé en ce que ladite batterie comprend une seconde plaque électrique (40) et des séparateurs (30) et en ce que ledit procédé comprend l'étape consistant à enrouler ladite première plaque électrique (20), ladite seconde plaque électrique (40) et les séparateurs (30) pour former un assemblage de plaques et de séparateurs enroulés en spirale (14).

6. Procédé selon la revendication 5, comprenant l'étape consistant à réaliser ledit enroulement de telle sorte que ladite première plaque électrique (20) s'avance vers l'extérieur à partir d'une extrémité dudit ensemble de plaques et de séparateurs enroulés en spirale (14) et que ladite seconde plaque électrique (40) s'avance vers l'extérieur à partir de l'autre extrémité.

7. Procédé selon la revendication 1, 2,3 ou 4, caractérisé en ce que ladite batterie comprend une pluralité de premières plaques électriques (120), une pluralité de secondes plaques électriques (140) et une pluralité de séparateurs (130), et en ce que ledit procédé comprend l'étape consistant à disposer en empilage lesdites premières plaques électriques (120), lesdites secondes plaques électriques (140) et lesdits séparateurs (130).

8. Procédé selon la revendication 5, 6 ou 7, caractérisé en ce que lesdites plaques électriques présentent chacune une épaisseur inférieure à 0,127 mm (0,005 pouce).
